(19) Europäisches Patentamt
European Patent Office
Office européen des brevets

(11) EP 4 729 861 A1

## (12) EUROPEAN PATENT APPLICATION

(43) Date of publication:
22.04.2026 Bulletin 2026/17

(21) Application number: 25209549.2

(22) Date of filing: 17.10.2025

(51) International Patent Classification (IPC):
*F25B 49/02* (2006.01)

(52) Cooperative Patent Classification (CPC):
**F25B 49/02; F25B 41/20;** F25B 5/02; F25B 6/02;
F25B 2400/24; F25B 2600/2507; F25B 2700/133;
F25B 2700/135; F25B 2700/2111

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 18.10.2024 US 202418920102

(71) Applicant: Robert Bosch GmbH
70442 Stuttgart (DE)

(72) Inventors:
• Christensen, John F.
Elk Grove, CA, 95758 (US)
• Mayer, Daniel
Scotts Valley, CA, 95066 (US)
• Ji, Weiqi
Mountain View, CA, 94041 (US)

(74) Representative: Isarpatent
Patent- und Rechtsanwälte PartG mbB
Friedrichstraße 31
80801 München (DE)

## (54) METHOD FOR MONITORING A THERMAL ENERGY STORAGE MODULE

(57)     A thermal management system is disclosed that provides virtual sensors that estimate the state of charge and/or the state of health of an integrated thermal energy storage module. Physical sensors of the thermal management system measure values of a plurality of parameters of the thermal management system. A controller of the thermal management system and/or a cloud backend implements one or more models or algorithms to provide virtual sensors that estimate the state of charge and/or the state of health of the integrated thermal energy storage module, based on the measured parameters. The estimated states of charge and states of health of the thermal energy storage module provide additional useful information to the user or owner of the thermal management system and enable better control of the thermal management system by the controller.

FIG. 1

EP 4 729 861 A1

**Description**

FIELD

The devices and methods disclosed in this document relate to thermal energy storage and, more particularly, to estimating state of charge and state of health in thermal energy storage.

BACKGROUND

Unless otherwise indicated herein, the materials described in this section are not admitted to be the prior art by inclusion in this section.

Increasing the deployment of renewable energy necessitates energy storage in order to accommodate the increasing mismatch between the time of high energy demand (e.g., cooling homes in the summer during the late afternoon/evening) and the time of high rates of electricity generation (e.g., from wind farms that tend to peak at night or photovoltaics that peak mid-day).

Thermal energy storage is a relatively cheap, safe and convenient method of energy storage. State-of-the-art heat pump systems are expected to begin incorporating thermal energy storage to enhance energy efficiency and optimize performance by decoupling heating and cooling demands from energy supply fluctuations. Such systems may utilize advanced thermal energy storage technologies, such as phase change materials or high-capacity water tanks, which will allow thermal energy to be stored during off-peak hours and later released when demand peaks.

Similar to battery energy storage, algorithms or sensors to estimate the state of charge and state of health are essential for the operation of the thermal energy storage. However, measuring the state of charge and state of health of thermal energy storage presents several challenges. Particularly, conventional sensors may struggle to capture the dynamic nature of energy storage, particularly in systems that employ phase change materials or other complex thermal storage mediums. Additionally, such conventional sensors increase the cost and complexity of system in which the thermal energy storage is incorporated.

SUMMARY

A method for monitoring a thermal energy storage module in a thermal management system is disclosed. The method comprises measuring, with at least one sensor, values of at least one parameter of the thermal management system. The method further comprises determining, with at least one processor, at least one of (i) a state of charge of the thermal energy storage module or (ii) a state of health of the thermal energy storage module, based on the measured values of the at least one parameter of the thermal management system.

BRIEF DESCRIPTION OF THE DRAWINGS

The foregoing aspects and other features of the system and methods are explained in the following description, taken in connection with the accompanying drawings.

FIG. 1 shows an overview of a workflow for providing virtual state of charge and state of health sensors in a thermal management system having an integrated thermal energy storage module.

FIG. 2 shows exemplary components of a heat pump system for a building having integrated thermal energy storage.

FIG. 3 shows a flow diagram for a method for monitoring a thermal energy storage module in a thermal management system.

DETAILED DESCRIPTION

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one skilled in the art to which this disclosure pertains.

Overview

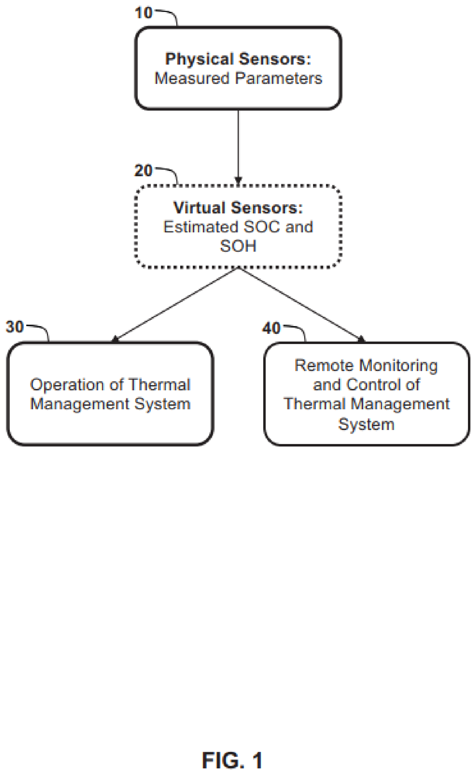

FIG. 1 shows an overview of a workflow for providing virtual state of charge and state of health sensors in a thermal management system having an integrated thermal energy storage module. In the exemplary embodiment of the disclosure, the thermal management system is a heat pump system for heating and cooling a building. However, although the features of the disclosure are primarily described with respect to a heat pump system, it should be appreciated that the thermal management system may similarly comprise an air conditioner for cooling a building, a thermal management system for heating or cooling a motor vehicle, or any other thermal management system that operates using similar principles, such as a refrigerator or freezer.

Many state-of-the-art thermal management systems, such as those with Internet of Things (IoT) functionality incorporate a variety of sensors for monitoring the states of the thermal management system. However, for thermal management systems having an integrated thermal energy storage module, estimating a state of charge or a state of health of the thermal energy storage module can be challenging and the direct measurement of the state of charge or the state of health with additional sensors can increase the cost of the thermal management system.

Disclosed herein is a thermal management system and method for providing virtual sensors that estimate the state of charge and/or the state of health of an integrated thermal energy storage module. Particularly, physical sensors (block 10) of the thermal management system measure values of a plurality of parameters of the thermal management system, such as compressor frequency, indoor temperature, outdoor temperature, refrigerant flow rates, etc. A controller of the thermal management system and/or a cloud backend implements one or more models or algorithms to provide virtual sensors (block 20) that estimate the state of charge and/or the state of health of the integrated thermal energy storage module.

In some embodiments, the controller of the thermal management system operates (block 30) at least one component of the thermal management system in a manner depending on the estimated state of charge or the estimated state of health. The estimated states of charge and states of health of the thermal energy storage module provide additional useful information to the user or owner of the thermal management system and enable better control of the thermal management system. For example, the thermal management system may be operated depending on the estimated state of charge to balance energy supply and demand more effectively, thereby optimizing comfort and reducing energy costs. Additionally, the thermal management system may be operated depending on the estimated state of health to ensure that the thermal management system operates reliably, to prolong the lifespan of the thermal energy storage module, and to maintain optimal energy efficiency. Additionally, in some embodiments, a user or owner of the thermal management system is enabled to remotely monitor and control (block 40) the thermal management system via a mobile application or a web application.

Exemplary Heat Pump System Having Integrated Thermal Energy Storage

In an effort to provide a better understanding of the features of the disclosure, an exemplary thermal management system in the form of a heat pump system is described in detail, which incorporates thermal energy storage.

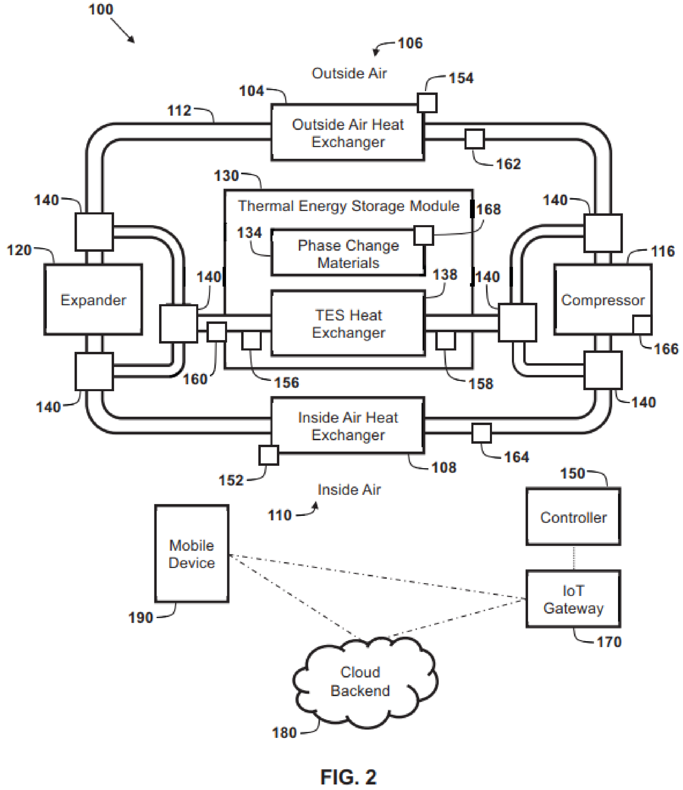

FIG. 2 shows exemplary components of a heat pump system 100 for a building having integrated thermal energy storage. In the illustrated example, the heat pump system 100 includes an outside air heat exchanger 104, an inside air heat exchanger 108, a refrigerant loop 112, a compressor 116, and an expander 120. Additionally, the heat pump system 100 includes or is integrated with a thermal energy storage module 130 by way of a plurality of switchable valves 140.

The outside air heat exchanger 104 is configured to transfer heat between a first environment, i.e., including outside air 106, and a refrigerant circulating through the refrigerant loop 112. Structurally, in at least some embodiments, the outside air heat exchanger 104 includes a series of coiled metal tubes or metal fins (not shown), through which the refrigerant circulates, that increase the surface area for heat exchange and facilitate the efficient absorption or dissipation of thermal energy. The outside air heat exchanger 104 is arranged outside of the building and, in at least some embodiments, is provided in a housing, e.g., metal casing, (not shown) to protect it from environmental factors. Additionally, in some embodiments, a fan is mounted inside the housing to blow air over the coiled tubes or fins of the outside air heat exchanger 104 to provide greater heat transfer.

The inside air heat exchanger 108 is configured to transfer heat between the refrigerant circulating through the refrigerant loop 112 and a second environment, i.e., including inside air 110. Structurally, in at least some embodiments, the inside air heat exchanger 108 includes a series of coiled metal tubes or metal fins (not shown), through which the refrigerant circulates, that increase the surface area for heat exchange and facilitate the efficient absorption or dissipation of thermal energy. The inside air heat exchanger 108 is arranged inside of the building and, in at least some embodiments, is arranged within an indoor ventilation system, such that a fan mounted within the ventilation system blows air through the coiled tubes or fins of the outside air heat exchanger 104 to distribute conditioned air throughout the building.

The refrigerant loop 112 is a closed, continuous loop system that circulates refrigerant through the various components of the heat pump system 100, enabling the transfer of thermal energy. In some embodiments, the refrigerant loop 112 may more broadly take the form of a thermal energy transport fluid loop that circulates thermal energy transport fluid, including refrigerants, water, glycol solutions (antifreeze), or the like. Thus, references herein to the refrigerant and the refrigerant loop 112 should be understood to alternatively incorporate any thermal energy transport fluid. The refrigerant loop 112 consists of tubing that connects the components of the heat pump system 100, including the outside air heat exchanger 104, the inside air heat exchanger 108, the compressor 116, and the expander 120. The refrigerant flows through these components in a cyclic process, in some cases undergoing phase changes between liquid and gas as it absorbs or releases heat. Additionally, as will be discussed in greater detail below, the refrigerant loop 112 also connects with the thermal energy storage module 130 by way of the plurality of switchable valves 140 to store thermal energy in and release thermal energy from the thermal energy storage module 130.

The compressor 116 is positioned in the refrigerant loop 112 along a first circulation path between the inside air heat exchanger 108 and the outside air heat exchanger 104. The compressor 116 is configured to compress and circulate the refrigerant through the refrigerant loop 112. The compressor 116 includes a motor that uses electrical energy to compress the refrigerant to increase both the pressure and the temperature of the refrigerant, generally after the refrigerant has absorbed heat from elsewhere along the refrigerant loop 112. In some embodiments, the heat pump system 100 includes multiple compressors 116.

The expander 120 is positioned in the refrigerant loop 112 along a second circulation path between the inside air heat exchanger 108 and the outside air heat exchanger 104, which is different from the first circulation path including the compressor 116. The expander 120 is configured to further regulate the pressure of the refrigerant as it moves through the refrigerant loop 112. Particularly, the expander 120 includes an expansion valve or capillary tube configured to lower both the pressure and the temperature of the refrigerant, generally after the refrigerant has released heat elsewhere along the refrigerant loop 112. In some embodiments, the heat pump system 100 includes multiple expanders 120.

It should be appreciated that the illustrated embodiment of the heat pump system 100 is in the form of an air-source heat pump. However, in alternative embodiments, the heat pump system 100 may take the form of a ground-source (geothermal) heat pump or a water-source heat pump. Ground-source (geothermal) heat pumps transfer heat between the building and the ground or groundwater. These systems use underground refrigerant loops that absorb heat from the earth or release heat to the earth, which remains at a relatively constant temperature year-round. Similarly, water-source heat pumps exchange heat with a water tank in the building or with a body of water, such as a lake, river, or well, or. These systems draw heat from the water for heating or discharge heat into the water for cooling.

In any case, the heat pump system 100 advantageously includes the thermal energy storage module 130. The thermal energy storage module 130 is configured to store excess thermal energy for later release. Particularly, the thermal energy storage module 130 captures excess thermal energy when the heat pump system 100 is producing more thermal energy than is needed for immediate use. For example, during periods of high heat pump efficiency or low demand, the heat pump system 100 can divert excess thermal energy into the thermal energy storage module 130. When demand increases or the heat pump system 100 is not operating optimally, the stored thermal energy can be released back into the refrigerant loop 112 to meet heating or cooling needs. This process helps balance the load, reduce peak energy consumption, and improve overall system efficiency.

The thermal energy storage module 130 typically consists of one or more insulated storage tanks (not shown) filled with a thermal storage medium, such as water or phase-change materials. In the illustrated embodiment, the thermal energy storage module 130 includes phase-change materials 134 and a TES heat exchanger 138. The TES heat exchanger 138 is connected in the refrigerant loop 112 via the plurality of switchable valves 140 that are operated to direct the flow of refrigerant between the thermal energy storage module 130 and the rest of the heat pump system 100. In some embodiments, the thermal energy storage module 130 has its own compressor or expander (not shown) such that it is easier to retrofit existing designs compared to fully relying on the compressor 116 and expander 120 of the heat pump system 100. The compressor within the thermal energy storage module 130 could be optimized particularly for the thermal energy storage module 130, and thus could be more efficient and lower cost.

The phase-change materials 134 in the thermal energy storage module 130 are substances that store and release thermal energy through phase changes, typically from solid to liquid or vice versa. It should be appreciated that phase-change materials 134 may alternatively include any other thermal storage medium, such as water. When the heat pump system 100 generates excess thermal energy, the phase-change materials 134 can absorb thermal energy and undergo a phase change, effectively storing the thermal energy at a constant temperature. Conversely, when there is a demand for thermal energy, the phase-change materials 134 can release the stored thermal energy as they revert to their original phase.

The TES heat exchanger 138 in the thermal energy storage module 130 is configured to transfer heat between the refrigerant circulating through the refrigerant loop 112 and the phase-change materials 134. Structurally, in at least some embodiments, the TES heat exchanger 138 includes a series of coiled metal tubes or metal fins (not shown), through which the refrigerant circulates. The TES heat exchanger 138 is arranged within or adjacent to the phase-change materials 134 to maximize the contact surface area and ensure efficient heat exchange.

The TES heat exchanger 138 is connected between an inlet connection and an outlet connection (not shown) of the thermal energy storage module 130, such that refrigerant from the refrigerant loop 112 can flow through the TES heat exchanger 138 to store or release thermal energy in the phase-change materials 134. It should be appreciated that the "inlet connection" and "outlet connection" of the thermal energy storage module 130 do not necessarily refer to specific refrigerant connections, since the refrigerant may flow in either direction through the thermal energy storage module 130.

Thus, the "inlet connection" and "outlet connection" of the thermal energy storage module 130 should be understood as interchangeable.

The plurality of switchable valves 140 are suitably arranged and operated to manage the storage and release of thermal energy within the thermal energy storage 130, as well as direct the flow of refrigerant through the outside air heat exchanger 104 and/or the inside air heat exchanger 108. In some embodiments, the plurality of switchable valves 140 may include multi-way valves (e.g., 3-way valves), or equivalent arrangements of multiple valves. The plurality of switchable valves 140 may include a wide variety of possible configurations that enable the thermal energy storage 130 to be selectively bypassed in a first switching state, selectively connected in series with the outside air heat exchanger 104 in a second switching state, and selectively connected in series with the inside air heat exchanger 108 in a third switching state.

Additionally, in some embodiments, the plurality of switchable valves 140 have a configuration that enables the compressor 116 and/or the expander 120 to, in different switching states, be selectively connected in the refrigerant loop 112 between the outside air heat exchanger 104 and TES heat exchanger 138, selectively connected in the refrigerant loop 112 between the TES heat exchanger 138 and the inside air heat exchanger 108, and selectively connected in the refrigerant loop 112 between the outside air heat exchanger 104 and the inside air heat exchanger 108. Finally, in some embodiments, the plurality of switchable valves 140 have a configuration that enables the compressor 116 and/or the expander 120 to, in different switching states, be reversed in the refrigerant loop 112.

In at least some embodiments, the heat pump system 100 further includes a controller 150 configured to manage the overall operation of the heat pump system 100. To these ends, the controller 150 is configured to monitor a variety of parameters including, for example, inside and outside temperatures, temperatures of the refrigerant entering into and leaving from the thermal energy storage module 130, refrigerant flow rates at different points in the refrigerant loop 112, a compressor frequency of the compressor 116, a density of the phase-change materials 134, electrical properties of the phase-change materials 134, or magnetic properties of the phase-change materials 134. By continuously monitoring these parameters, the controller 150 makes real-time adjustments to the operation of the heat pump system 100, such as modulating the speed of the compressor 116 or adjusting the plurality of switchable valves 140 to store thermal energy in the thermal energy storage module 130 or release thermal energy from the thermal energy storage module 130.

In some embodiments, the controller 150 is operably connected to a variety of temperature sensors configured to measure different temperatures within the heat pump system 100. These temperature sensors may comprise thermocouples or thermistors, positioned strategically to measure respective temperatures. In one embodiment, an indoor temperature sensor 152 measures one or both of an ambient indoor temperature (e.g., at a thermostat) and a temperature of the air entering the inside air heat exchanger 108. In one embodiment, an outdoor temperature sensor 154 measures one or both of an ambient outdoor temperature and a temperature of the air entering the outside air heat exchanger 104. In one embodiment, a TES inlet temperature sensor 156 measures a temperature of the refrigerant entering the thermal energy storage module 130. In one embodiment, a TES outlet temperature sensor 158 measures a temperature of the refrigerant leaving the thermal energy storage module 130. It should be appreciated that the TES inlet temperature sensor 156 and the TES outlet temperature sensor 158 are interchangeable. In particular, whether each sensor measures in inward or outward refrigerant flow depends on the direction of refrigerant flow through the thermal energy storage module 130.

In some embodiments, the controller 150 is operably connected to one or more refrigerant flow rate sensors configured to measure different refrigerant flow rates within the heat pump system 100. The refrigerant flow rate sensor(s) may comprise a variable area flow meter or a similar device designed to detect changes in refrigerant flow. In some embodiments, the one or more refrigerant flow rate sensors include a respective refrigerant flow rate sensor that measures a flow rate through each of the heat exchangers in the heat pump system 100. Particularly, a TES refrigerant flow rate sensor 160 measures the flow rate of the refrigerant circulating through the TES heat exchanger 138. An outside refrigerant flow rate sensor 162 measures the flow rate of the refrigerant circulating through the outside air heat exchanger 104. An inside refrigerant flow rate sensor 164 measures the flow rate of the refrigerant circulating through the inside air heat exchanger 108.

In some embodiments, the controller 150 is operably connected to a compressor frequency sensor 166 (e.g., a tachometer), which is integrated into the compressor 116. The compressor frequency sensor 166 measures the rotational speed of the compressor 116 and/or an operating current frequency of the compressor 116.

Finally, in some embodiments, the controller 150 is operably connected to PCM sensors 168, which may be integrated with the thermal energy storage module 130. The PCM sensors 168 directly measure one or more properties of the phase-change materials 134. In one embodiment, the PCM sensors 168 include an ultrasonic sensor that measures a density of the phase-change materials 134 using ultrasonic measurements. In one embodiment, the PCM sensors 168 include an electrical sensor that measures an electrical property (e.g., a resistance or impedance) of the phase-change materials 134. In one embodiment, the PCM sensors 168 include a magnetic sensor that measures a magnetic property of the phase-change materials 134.

The controller 150 is configured to selectively operate the heat pump system 100 in either a heating mode, a cooling mode, or a standby mode. In the standby mode, the heat pump system 100 is not actively heating or cooling but remains ready to engage when needed.

In the heating mode, the heat pump system 100 operates by transferring heat from the outside air to the inside of a building using the refrigerant loop 112. The controller 150 operates the compressor 116 to compress the refrigerant, increasing its temperature and pressure. The higher-temperature, higher-pressure refrigerant from the compressor 116 is circulated through the inside air heat exchanger 108, where it releases heat to warm the inside air 110. Next, the refrigerant passes through the expander 120, where it undergoes a reduction in pressure and temperature. The lower-temperature, lower-pressure refrigerant from the expander 120 is circulated through the outside air heat exchanger 104, where it absorbs heat from the outside air, even in cold conditions. The refrigerant then returns to the compressor 116 to repeat the cycle.

In the cooling mode, the heat pump system 100 works in reverse to transfer heat from inside the building to the outside environment. The controller 150 operates the compressor 116 to compress the refrigerant, increasing its temperature and pressure. The higher-temperature, higher-pressure refrigerant from the compressor 116 is circulated through the outside air heat exchanger 104, where it releases heat into the outside air 106. Next, the refrigerant passes through the expander 120, where it undergoes a reduction in pressure and temperature. The lower-temperature, lower-pressure refrigerant from the expander 120 is circulated through the inside air heat exchanger 108, where it absorbs heat from the inside air 110. The refrigerant then returns to the compressor 116 to repeat the cycle.

In addition to operating the heat pump system 100 in the conventional heating or cooling modes, the controller 150 operates the plurality of switchable valves 140 to control the heat pump system 100 to store thermal energy in the thermal energy storage module 130 or to release thermal energy from the thermal energy storage module 130 in either of the heating and cooling modes, as needed.

When the heat pump system 100 operates to store thermal energy in the thermal energy storage module 130 (i.e., in a charging mode), the controller 150 operates the plurality of switchable valves 140 in a specific manner to direct refrigerant flow from the compressor 116 or from the expander 120 towards the thermal energy storage module 130. In the charging mode, the controller 150 operates the compressor 116 to circulate the refrigerant such that excess thermal energy generated during operation, is transferred to the thermal energy storage module 130 instead of being released into the inside air 110 or released into the outside air 106. Particularly, in the cooling mode, the thermal energy storage module 130 stores thermal energy absorbed from inside air 110 for the purpose of cooling the environment. Conversely, in the heating mode, the thermal energy storage module 130 stores thermal energy absorbed from outside air 106.

When the heat pump system 100 operates to release thermal energy from the thermal energy storage module 130 (i.e., in a discharging mode), the controller 150 operates the plurality of switchable valves 140 in a specific manner to direct refrigerant flow from the thermal energy storage module 130 to the inside air heat exchanger 108 or to the outside air heat exchanger 104. In the discharging mode, the controller 150 operates the compressor 116 to circulate the refrigerant such that thermal energy is released from the thermal energy storage module 130 instead of being absorbed from the outside air 106 or absorbed from the inside air 110. Particularly, in the heating mode, the thermal energy storage module 130 releases thermal energy into the inside air 110 for the purpose of heating the building. Conversely, in the cooling mode, the thermal energy storage module 130 releases thermal energy into the outside air 106.

In some embodiments, the controller 150 incorporates intelligent algorithms that determine the optimal times for charging and discharging the thermal energy storage module 130 based on predictive analytics of energy demand, weather forecasts, and electricity tariff rates. The controller 150 adjusts the operation of the compressor 116 and adjusts the flow paths of the refrigerant loop 112 using the plurality of switchable valves 140 to store or release thermal energy in the thermal energy storage module 130, to minimize energy costs, maximize efficiency, and prolong the lifetime of the heat pump system 100.

In at least some embodiments, the heat pump system 100 further includes an IoT gateway 170. The IoT gateway 170 acts as a communication bridge between the controller 150 and a cloud backend 180 and/or a mobile electronic device 190. The IoT gateway 170 includes, for example, a microprocessor and a network communications module including one or more transceivers (e.g., Wi-Fi, Ethernet, or cellular) for connectivity to the cloud backend 180 and/or the mobile electronic device 190. The IoT gateway 170 enables data exchange and remote monitoring by transmitting system performance metrics, such as sensor data, energy usage, and operational status, to the cloud backend 180 and/or the mobile electronic device 190. Additionally, the IoT gateway 170 enables user control of the heat pump system 100 via a mobile application on the mobile electronic device 190 or via a web application of the cloud backend 180.

In at least some embodiments, the cloud backend 180 includes one or more servers that act as the central hub for data processing, storage, and system management. The cloud backend 180 receives data from the IoT gateway 170, including sensor data, energy usage, and operational status, and processes and stores this information for analysis and optimization. In some embodiments, the cloud backend 180 also facilitates user interaction by communicating with the mobile electronic device 190 or with another computing device, allowing users to remotely monitor and control the heat pump system 100 via the mobile application or the web application.

In at least some embodiments, the mobile electronic device 190 operates as a user interface for remotely monitoring and controlling the heat pump system 100. The mobile electronic device 190 communicates with the IoT gateway 170, either directly or via the cloud backend 180, allowing users to monitor system performance, adjust temperature settings, schedule heating or cooling modes, and the like.

Methods for Estimating States of Charge and States of Health in Thermal Energy Storage

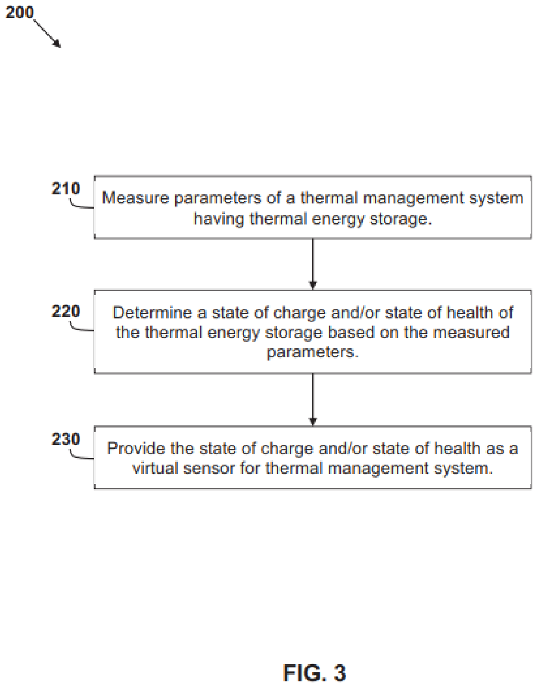

FIG. 3 shows a flow diagram for a method 200 for monitoring a thermal energy storage module 130 in a thermal management system, such as the heat pump system 100. The method 200 advantageously estimates states of charge and states of health of the thermal energy storage module 130 using measurement values measured from a variety of sensors of the heat pump system 100. The method 200 advantageously provides the estimates of the states of charge and states of health as virtual sensors of the heat pump system 100. In this way, the estimates of the states of charge and states of health can be monitored by the cloud backend 180 and by the user via the mobile electronic device 190. Moreover, the estimates of the states of charge and states of health can be used to optimize operation of the heat pump system 100 to improve energy efficiency and to prolong the life of the thermal energy storage module 130.

The method 200 begins with measuring parameters of a thermal management system having thermal energy storage (block 210). Particularly, the controller 150 of the heat pump system 100 operates one or more of the sensors of the heat pump system 100 to measure values of a plurality of parameters of the heat pump system 100. Particularly, the controller 150 operates the indoor temperature sensor 152 to measure one or both of an ambient indoor temperature and an air temperature of the air entering the inside air heat exchanger 108. The controller 150 operates the outdoor temperature sensor 154 to measure one or both of an ambient outdoor temperature and an air temperature of the air entering the outside air heat exchanger 104. The controller 150 operates the TES inlet temperature sensor 156 to measure a temperature of the refrigerant entering the thermal energy storage module 130. The controller 150 operates the TES outlet temperature sensor 158 to measure a temperature of the refrigerant leaving the thermal energy storage module 130. The controller 150 operates the outside refrigerant flow rate sensor 162 to measure the flow rate of the refrigerant circulating through the outside air heat exchanger 104. The controller 150 operates the inside refrigerant flow rate sensor 164 to measure the flow rate of the refrigerant circulating through the inside air heat exchanger 108. The controller 150 operates the compressor frequency sensor 166 to measure the rotational speed of the compressor 116 and/or an operating current frequency of the compressor 116. Finally, the controller 150 operates the PCM sensors 168 to measure the density of the phase-change materials 134, electrical properties of the phase-change materials 134, or magnetic properties of the phase-change materials 134.

The method 200 continues with determining a state of charge and/or state of health of the thermal energy storage based on the measured parameters (block 220). Particularly, the controller 150 and/or a processor of the cloud backend 180 determines one or both of a state of charge of the thermal energy storage module 130 and a state of health of the thermal energy storage module 130. The state of charge and/or state of health are determined based on the measured values of the plurality of parameters of the heat pump system 100.

In some embodiments, the controller 150 and/or the cloud backend 180 determines one or both of the state of charge and the state of health using a dynamical system model:

$$\frac{d[SOC, SOH]}{dt} = F(SOC, SOH, compressor\ rpm, temperatures, refrigerants, other)$$

where *SOC* denotes the state of charge of the thermal energy storage module 130, SOH denotes the state of health of the thermal energy storage module 130, *compressor rpm* denotes the compressor frequency of the compressor 116, *temperatures* denotes the various temperatures measured within the heat pump system 100, *refrigerants* denotes the various refrigerant flow rates measured within the heat pump system 100 and/or material parameters of the refrigerant, and *other* denotes any other parameters of the heat pump system 100 that are measured or otherwise monitored. In some embodiments, the function *F* in the dynamical system model includes one or more of physical models, empirical models, and machine learning models.

As used herein, a "fully charged" state of charge, or SOC = 100%, means that the phase-change materials 134 (or other thermal storage medium) are fully converted to their highest energy state. Conversely, as used herein, a "fully discharged" state of charge, or SOC = 0%, that the phase-change materials 134 are fully converted to their lowest energy state. For example, in a solid-liquid phase-change materials, the highest energy state is liquid and the lowest energy state is solid. However, it should be appreciated that the highest and lowest energy states may differ depending on practical limits on the degree of phase change possible for the phase-change materials 134. For example, some residual solid particles may be present in "fully charged" phase-change materials 134 and, likewise, some residual liquid particles may be present in "fully discharged" phase-change materials 134.

In at least some embodiments, the state of health of the thermal energy storage module 130 encompasses at least two parameters. Firstly, the state of health includes a total thermal energy capacity of the phase-change materials 134, i.e., the total amount of energy that can be cycled between SOC=1 and SOC=0. Secondly, the state of health includes a heat transfer coefficient between refrigerant flowing through the TES heat exchanger 138 and the phase-change materials 134.

It should be appreciated that the state of charge and state of health of the thermal energy storage module 130 typically have very different timescales. Accordingly, in at least one embodiment, the controller 150 and/or the cloud backend 180 determines state of charge using a state of charge model and determines state of health using a state of health model, which is separate from the state of charge model. Additionally, in some embodiments, the state of charge model is deployed on an edge device, such as the controller 150, for real-time control of the heat pump system 100, whereas the state of health model can be deployed on the cloud backend 180, since it changes very slowly. Particularly, the controller 150 of the heat pump system 100 determines the state of charge and the cloud backend 180 (i.e., a processor of a remote server) determines the state of health.

In some embodiments, the controller 150 and/or the cloud backend 180 determines a rate of thermal energy transfer between the refrigerant flowing through the TES heat exchanger 138 and the phase-change materials 134. As discussed below, this rate of thermal energy transfer can be used to determine the state of charge and/or the state of health of the thermal energy storage module 130.

In one embodiment, the controller 150 and/or the cloud backend 180 determines the rate of thermal energy transfer by determining a flow rate of the refrigerant flowing through the TES heat exchanger 138, e.g., using the TES refrigerant flow rate sensor 160. Next, the controller 150 and/or the cloud backend 180 determines a temperature of the refrigerant flowing into the TES heat exchanger 138, e.g., using the TES inlet temperature sensor 156. Next, the controller 150 and/or the cloud backend 180 determines a temperature of the refrigerant flowing out of the TES heat exchanger 138, e.g., using the TES outlet temperature sensor 158. Finally, the controller 150 and/or the cloud backend 180 determines the rate of thermal energy transfer between the TES heat exchanger 138 and the phase-change materials 134 using an energy balance equation, based on the flow rate of the refrigerant flowing through the TES heat exchanger 138, the temperature of the refrigerant flowing into the TES heat exchanger 138, and the temperature of the refrigerant flowing out of the TES heat exchanger 138.

The energy balance equation is a conservation of energy equation that compares a thermal energy flowing into the thermal energy storage module 130 with a thermal energy flowing out of the thermal energy storage module 130 to estimate the rate of thermal energy being stored or released from the thermal energy storage module 130 (i.e., the rate of thermal energy transfer between the TES heat exchanger 138 and the phase-change materials 134). The energy balance equation incorporates at least one material property of the refrigerant, such as a heat capacity of the refrigerant and/or a density of the refrigerant.

In some embodiments, the energy balance equation includes one or more terms accounting for additional thermal sources or thermal sinks, aside from the refrigerant and the phase-change materials 134. In one example, the energy balance equation includes terms accounting for frictional heating related to viscous flow of the refrigerant through the TES heat exchanger 138. In another example, the energy balance equation includes terms accounting for heating or cooling of the phase-change materials 134 or the TES heat exchanger 138 due to higher/lower ambient temperatures, i.e., based on the measured inside and outside temperatures and estimated heat transfer coefficients depending on the insulation of the thermal energy storage module 130.

In one embodiment, the controller 150 and/or the cloud backend 180 determines the state of charge by quantifying an amount of thermal energy exchanged between the refrigerant flowing through the TES heat exchanger 138 and the phase-change materials 134. The controller 150 and/or the cloud backend 180 determines the amount of thermal energy exchanged between the refrigerant flowing through the TES heat exchanger 138 and the phase-change materials 134 by integrating the rate of thermal energy transfer. Next, the controller 150 and/or the cloud backend 180 determines an amount of thermal energy stored in the phase-change materials 134 based on an initial amount of thermal energy stored in the phase-change materials 134 and the amount of thermal energy exchanged between the refrigerant flowing through the TES heat exchanger 138 and the phase-change materials 134. Finally, the controller 150 and/or the cloud backend 180 determines the state of charge of the thermal energy storage module 130 by dividing the amount of thermal energy stored in the phase-change materials 134 by a total thermal energy capacity of the phase-change materials 134.

In another embodiment, the controller 150 and/or the cloud backend 180 determines the state of charge directly based on the rate of thermal energy transfer, rather than by integration. Particularly, the controller 150 and/or the cloud backend 180 estimates at least one heat transfer parameter based on the rate of thermal energy transfer. In one embodiment, the at least one heat transfer parameter includes a thermal conductivity of the phase-change materials 134. In another embodiment, the at least one heat transfer parameter includes a heat transfer coefficient between refrigerant flowing through the TES heat exchanger 138 and the phase-change materials 134. Next, the controller 150 and/or the cloud backend 180 determines the state of charge based on the estimated at least one heat transfer parameter, using known relationships between state of charge and the at least one heat transfer parameter, which tend to vary in a predictable manner depending on the state of charge. The known relationships between state of charge and the at least one heat transfer parameter may, for example, be determined empirically and stored in a look up table that is referenced by the controller 150 to determine the state of charge.

In another embodiment, the controller 150 and/or the cloud backend 180 determines the state of charge using other measurement methods. In one embodiment, the controller 150 and/or the cloud backend 180 measures a density of the phase-change materials 134 using an ultrasonic sensor, and determines the state of charge based on the density of the phase-change materials 134, which tends to vary linearly with the state of charge or follow some a priori measurable trend. In one embodiment, the controller 150 and/or the cloud backend 180 measures electrical properties (e.g., a resistance or impedance) of the phase-change materials 134 using an electrical sensor, and determines the state of charge based on the electrical properties of the phase-change materials 134. In one embodiment, the controller 150 and/or the cloud backend 180 measures magnetic properties of the phase-change materials 134 using a magnetic sensor, and determines the state of charge based on the magnetic properties of the phase-change materials 134.

In some embodiments, the controller 150 and/or the cloud backend 180 determines the state of charge using a machine learning model that is trained using a plurality of training samples which provide measured parameters of the heat pump system 100 associated with a ground truth state of charge. The training samples are fed into the machine learning model in an iterative manner and the error between the predicted state of charge by the machine learning model and the ground truth state of charge are used to optimize and refine the learnable parameters of the machine learning model over the course of the training. It should be appreciated that the machine learning model can adopt a wide variety of architectures, at least including artificial neural networks. In some embodiments, the controller 150 and/or the cloud backend 180 determines the state of charge using a combination of a machine learning model and a physical or empirical model, such as those discussed above.

As used herein, the term "machine learning model" refers to a system or set of program instructions and/or data configured to implement an algorithm, process, or mathematical model (e.g., a neural network) that predicts or otherwise provides a desired output based on a given input. It will be appreciated that, in general, many or most parameters of a machine learning model are not explicitly programmed and the machine learning model is not, in the traditional sense, explicitly designed to follow particular rules in order to provide the desired output for a given input. Instead, a machine learning model is provided with a corpus of training data in an iterative manner from which it identifies or "learns" patterns and statistical relationships in the data, which are generalized to make predictions or otherwise provide outputs with respect to new data inputs. The result of the training process is embodied in a plurality of learned parameters, kernel weights, and/or filter values that are used in the various components of the machine learning model to perform various operations or functions.

A combination of the techniques discussed above for determining state of charge can be used, with a weighting between the multiple techniques to improve the accuracy of the state of charge determination. A combination of techniques may, for example, help to account for integration errors and unquantified heat sources and sinks that impact the energy balance. Particularly, in one embodiment, the controller 150 and/or the cloud backend 180 determines a first estimated state of charge of the thermal energy storage module 130 using a first technique and determines a second estimated state of charge of the thermal energy storage module 130 using a second technique. The first and second technique may include the integration-based technique, the heat transfer parameter-based technique, the density-based technique, the electrical properties-based technique, the magnetic properties-based technique, the machine learning-based technique, or any other technique for determining state of charge. Next, the controller 150 and/or the cloud backend 180 determines the state of charge as a weighting of the first estimated state of charge and the second estimated state of charge, e.g., as a weighted average or weighted summation. It should be appreciated that more than two techniques can be used.

As mentioned above, in at least some embodiments, the state of health of the thermal energy storage module 130 encompasses or includes a total thermal energy capacity of the phase-change materials 134, i.e., the total amount of energy that can be cycled between SOC=1 and SOC=0. In some embodiments, the controller 150 and/or the cloud backend 180 determines a total thermal energy capacity of the phase-change materials 134 and determines the state of health based on the total thermal energy capacity of the phase-change materials 134.

In some embodiments, to determine the total thermal energy capacity, the controller 150 and/or the cloud backend 180 determines a measured change in the state of charge, i.e., $\frac{d\text{SOC}}{dt}$, using direct measurement, e.g., using the density-based technique, the electrical properties-based technique, or the magnetic properties-based technique discussed above. Next, the controller 150 and/or the cloud backend 180 determines an estimated change in the state of charge $\frac{d\text{SOC}}{dt}$ using a physical or empirical model, based on the measured values of the plurality of parameters of the heat pump system 100, e.g., using the integration-based technique or the heat transfer parameter-based technique discussed above. Finally, the controller 150 and/or the cloud backend 180 determines the total thermal energy capacity based on an error between the estimated change in the state of charge and the measured change in the state of charge. In one example, the controller 150 and/or the cloud backend 180 determines the total thermal energy capacity based on a ratio of the measured change in the state of charge over the estimated change in the state of charge.

In another embodiment, to determine the total thermal energy capacity, the controller 150 and/or the cloud backend 180 determines a first estimated change in the state of charge $\frac{d\text{SOC}}{dt}$ using a first technique, based on the measured values of the plurality of parameters of the heat pump system 100, e.g., using the integration-based technique discussed above. Next, the controller 150 and/or the cloud backend 180 determines a second estimated change in the state of charge $\frac{d\text{SOC}}{dt}$ using a second technique, based on the measured values of the plurality of parameters of the heat pump system 100, e.g., using the heat transfer parameter-based technique discussed above. Finally, the controller 150 and/or the cloud backend 180 determines the total thermal energy capacity based on an error between the first estimated change in the state of charge and the second estimated change in the state of charge. In one example, the controller 150 and/or the cloud backend 180 determines the total thermal energy capacity based on a ratio of the estimated change in the state of charge determined using the integration-based technique over the estimated change in the state of charge determined using the heat transfer parameter-based technique.

As mentioned above, in at least some embodiments, the state of health of the thermal energy storage module 130 encompasses a heat transfer coefficient $HTC_{aged}$ between refrigerant flowing through the TES heat exchanger 138 and the phase-change materials 134. In some embodiments, the controller 150 and/or the cloud backend 180 determines the heat transfer coefficient $HTC_{aged}$ between refrigerant flowing through the TES heat exchanger 138 and the phase-change materials 134, and determines the state of health based on the heat transfer coefficient. In some embodiments, to determine the heat transfer coefficient $HTC_{aged}$, the controller 150 and/or the cloud backend 180 determines a rate of thermal energy transfer between refrigerant flowing through the TES heat exchanger 138 and the phase-change materials 134, using the energy balance equation. Next, the controller 150 and/or the cloud backend 180 determines the heat transfer coefficient $HTC_{aged}$ based on the rate of thermal energy transfer.

Additionally, in one embodiment, the controller 150 and/or the cloud backend 180 determines an expected heat transfer coefficient $HTC_{pristine}$ based on the state of charge, determined using one of the techniques discussed above. Based on the temperature of the refrigerant flowing into the TES heat exchanger 138, the flow rate of the refrigerant flowing through the TES heat exchanger 138, and the expected heat transfer coefficient $HTC_{pristine}$, the controller 150 and/or the cloud backend 180 determines a predicted temperature of the refrigerant flowing out of the TES heat exchanger 138, using the energy balance equation. Next, the controller 150 and/or the cloud backend 180 determines an actual temperature of the refrigerant flowing out of the TES heat exchanger 138, e.g., using the TES outlet temperature sensor 158. If the measured actual temperature of the refrigerant flowing out of the TES heat exchanger 138 deviates from the predicted temperature of the refrigerant flowing out of the TES heat exchanger 138 (e.g., is closer to temperature of the refrigerant flowing into the TES heat exchanger 138 than expected), then the controller 150 and/or the cloud backend 180 determines the state of health as a ratio (i.e., $HTC_{aged}/HTC_{pristine}$) of the actual heat transfer coefficient $HTC_{aged}$, determined using the energy balance equation, and the expected heat transfer coefficient $HTC_{pristine}$, determined based on the state of charge.

In some embodiments, the controller 150 and/or the cloud backend 180 determines the state of health using a machine learning model that is trained using a plurality of training samples which provide measured parameters of the heat pump system 100 associated with a ground truth state of health. The training samples are fed into the machine learning model in an iterative manner and the error between the predicted state of health by the machine learning model and the ground truth state of health are used to optimize and refine the learnable parameters of the machine learning model over the course of the training. It should be appreciated that the machine learning model can adopt a wide variety of architectures, at least including artificial neural networks. In some embodiments, the controller 150 and/or the cloud backend 180 determines the state of health using a combination of a machine learning model and a physical or empirical model, such as those discussed above.

In some embodiments, the controller 150 and/or the cloud backend 180 determines the state of charge and/or the state of health over time using a state estimation technique, such as an extended Kalman filter, a least squares regression, and a moving horizon estimator, that combines model predicted states and measured states to account for errors between measured states and model predicted states.

In at least some embodiments, the controller 150 receives over-the-air updates to the parameters of the models used for estimating the state of charge and/or the state of health of the thermal energy storage module 130. Particularly, when an update is available, the controller 150 receives via a transceiver of the IoT gateway 170 the updated parameters of the models, which may include adjustments based on new data or improved algorithms developed in the cloud backend 180. In this way, as the underlying models are improved and more field data is collected, the heat pump system 100 is enabled to provide and utilize more accurate estimates of the state of charge and/or the state of health.

The method 200 continues with providing the state of charge and/or state of health as a virtual sensor for thermal management system (block 230). Particularly, the heat pump system 100 is advantageously configured to provide the estimated states of charge and states of health of the thermal energy storage module 130 as virtual sensors of the heat pump system 100. In this way, the need for physical sensors is reduced. The estimated states of charge and states of health of the thermal energy storage module 130 provide additional useful information to the user or owner of the heat pump system 100 and enable better control of the heat pump system 100 by the controller 150.

In some embodiments, the controller 150 operates at least one component of the heat pump system 100 depending on the estimated states of charge of the thermal energy storage module 130. Particularly, it should be appreciated that the state of charge of the thermal energy storage module 130 is very useful information for optimizing operation of the heat pump system 100. In some embodiments, in the heating mode, in response to the state of charge falling below a first predetermined lower threshold (indicating low remaining heating capacity), the controller 150 activates the heat pump system 100 to store additional thermal energy in the thermal energy storage module 130. Similarly, in some embodiments, in the cooling mode, in response to the state of charge exceeding a first predetermined upper threshold (indicating low remaining cooling capacity), the controller 150 activates the heat pump system 100 to release additional thermal energy from the thermal energy storage module 130 into the outside air. Conversely, in some embodiments, in the heating mode, in response to the state of charge exceeding a second predetermined upper threshold (indicating substantial remaining heating capacity), the controller 150 performs any necessary heating by releasing thermal energy from the thermal energy storage module 130. Similarly, in some embodiments, in the cooling mode, in response to the state of charge falling below a second predetermined lower threshold (indicating substantial remaining cooling capacity), the controller 150 performs any necessary cooling by storing thermal energy in the thermal energy storage module 130. This dynamic management allows the heat pump system 100 to balance energy supply and demand more effectively, optimizing comfort and reducing energy costs.

In some embodiments, the controller 150 operates at least one component of the heat pump system 100 depending on the estimated states of health of the thermal energy storage module 130. Particularly, in one embodiment, in response to the state of health falling below a first predetermined lower threshold, the controller 150 adjusts operational parameters, such as reducing the charging and discharging rates, to prevent further degradation. Additionally, in one embodiment, in response to the state of health falling below a second predetermined lower threshold (that indicates more significant deterioration), the controller 150 transmits maintenance alerts to the cloud backend 180 or the mobile electronic device 190, or initiates a diagnostic routine to evaluate necessary repairs or replacements. By actively monitoring and responding to the state of health, the controller 150 ensures that the heat pump system 100 operates reliably, prolongs the lifespan of the thermal energy storage module 130, and maintains optimal energy efficiency.

Additionally, as discussed above, by way of the connectivity provided by the IoT gateway 170, a user or owner of the heat pump system 100 is enabled to remotely monitor and control the heat pump system 100 via a mobile application or a web application. To these ends, in some embodiments, the controller 150 periodically or continuously transmits, via the IoT gateway 170, the measured values of the plurality of parameters of the heat pump system 100, as well as the estimated states of charge and states of health of the thermal energy storage module 130, to the cloud backend 180. The cloud backend 180 receives the measured values of the plurality of parameters of the heat pump system 100 and, in at least some embodiments, stores them in a database.

Using the mobile electronic device 190 or any other computing device having a display screen, a user or owner of the heat pump system 100 can navigate to the mobile application or to the web application. The mobile electronic device 190 communicates with the cloud backend 180 or with the heat pump system 100 directly to receive the measured values of the plurality of parameters of the heat pump system 100, as well as the estimated states of charge and states of health of the thermal energy storage module 130. Within the mobile application or the web application, the measured values of the plurality of parameters of the heat pump system 100, as well as the estimated states of charge and states of health of the thermal energy storage module 130, are displayed on a display screen of the mobile electronic device 190 or other computing device, so that the user can remotely monitor the heat pump system 100. Additionally, in some embodiments, the mobile application or the web application enables the user to control or configure the heat pump system 100.

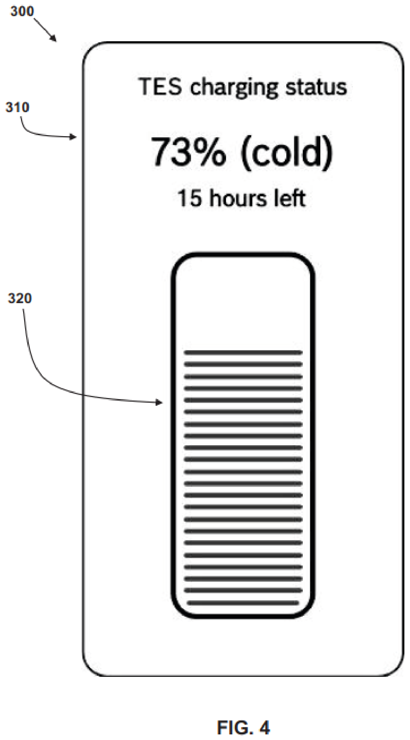

FIG. 4 shows an exemplary graphical user interface 300 for monitoring a charging status of the thermal energy storage module 130 using the mobile application of the mobile electronic device 190. The graphical user interface 300 includes a charge status summary 324 (e.g., "TES charging status, 73% (cold), 15 hours left"). Additionally, the graphical user interface 300 includes a graphical depiction of the state of charge in the form of a charge meter 326 that is filled in proportion to the estimated state of charge of the thermal energy storage module 130. It should be appreciated that, in the cooling mode a greater state of charge of the thermal energy storage module 130 corresponds to lesser remaining capacity for cooling. Accordingly, in some embodiments, the graphical user interface 300 may present the state of charge differently depending on whether the heat pump system 100 is operating in the heating or cooling mode. In the illustrated example, the "73% (cold)" may actually correspond to a 27% state of charge of the thermal energy storage module 130. If a heat pump system 100 were switched to the heating mode, the same state of charge would be indicated by "27% (hot)"

Embodiments within the scope of the disclosure may also include non-transitory computer-readable storage media or machine-readable medium for carrying or having computer-executable instructions (also referred to as program instructions) or data structures stored thereon. Such non-transitory computer-readable storage media or machine-readable medium may be any available media that can be accessed by a general purpose or special purpose computer.

By way of example, and not limitation, such non-transitory computer-readable storage media or machine-readable medium can comprise RAM, ROM, EEPROM, CD-ROM or other optical disk storage, magnetic disk storage or other magnetic storage devices, or any other medium which can be used to carry or store desired program code means in the form of computer-executable instructions or data structures. Combinations of the above should also be included within the scope of the non-transitory computer-readable storage media or machine-readable medium.

Computer-executable instructions include, for example, instructions and data which cause a general-purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

While the disclosure has been illustrated and described in detail in the drawings and foregoing description, the same should be considered as illustrative and not restrictive in character. It is understood that only the preferred embodiments have been presented and that all changes, modifications and further applications that come within the spirit of the disclosure are desired to be protected.

**Claims**

1. A method for monitoring a thermal energy storage module in a thermal management system, the method comprising:

   measuring, with at least one sensor, values of at least one parameter of the thermal management system; and
   determining, with at least one processor, at least one of (i) a state of charge of the thermal energy storage module or (ii) a state of health of the thermal energy storage module, based on the measured values of the at least one parameter of the thermal management system.

2. The method according to claim 1 further comprising at least one of:

   operating, with the at least one processor, at least one component of the thermal management system based on the at least one of (i) the state of charge or (ii) the state of health; and
   transmitting, with a transceiver, the at least one of (i) the state of charge or (ii) the state of health to an electronic device, the at least one of (i) the state of charge or (ii) the state of health being displayed on a display of the electronic device.

3. The method according to claim 1, the determining the state of charge further comprising:
   determining a rate of thermal energy transfer between a thermal energy transport fluid flowing through a heat exchanger of the thermal energy storage module and a thermal storage medium of the thermal energy storage module.

4. The method according to claim 3, the determining the rate of thermal energy transfer further comprising:

   measuring a flow rate of the thermal energy transport fluid flowing through the heat exchanger;
   measuring a first temperature of the thermal energy transport fluid flowing into the heat exchanger;
   measuring a second temperature of the thermal energy transport fluid flowing out of the heat exchanger; and
   determining the rate of thermal energy transfer between the heat exchanger and the thermal storage medium using an energy balance equation, based on the flow rate of the thermal energy transport fluid, the first temperature of the thermal energy transport fluid, the second temperature of the thermal energy transport fluid, and at least one material property of the thermal energy transport fluid, wherein the at least one material property of the thermal energy transport fluid preferably includes at least one of a heat capacity or a density.

5. The method according to claim 4, wherein the energy balance equation includes at least one term accounting for a thermal source or thermal sink other than the thermal energy transport fluid and the thermal storage medium.

6. The method according to claim 3, the determining the state of charge further comprising:

   determining an amount of thermal energy exchanged between the heat exchanger and the thermal storage medium by integrating the rate of thermal energy transfer;
determining an amount of thermal energy stored in the thermal storage medium based on the amount of thermal energy exchanged between the heat exchanger and the thermal storage medium; and
determining the state of charge by dividing the amount of thermal energy stored in the thermal storage medium by a total thermal energy capacity of the thermal storage medium.

7. The method according to claim 3, the determining the state of charge further comprising:

   estimating at least one heat transfer parameter of the thermal storage medium based on the rate of thermal energy transfer; and
   determining the state of charge based on the at least one heat transfer parameter, wherein the at least one heat transfer parameter preferably is a thermal conductivity of the thermal storage medium.

8. The method according to claim 1, the determining the state of charge further comprising:

   measuring a density of a thermal storage medium of the thermal energy storage module; and
   determining the state of charge based on the density of the thermal storage medium.

9. The method according to claim 1, the determining the state of charge further comprising:

   determining a first estimated state of charge of the thermal energy storage module using a first technique;
   determining a second estimated state of charge of the thermal energy storage module using a second technique; and
   determining the state of charge as a weighting of the first estimated state of charge and the second estimated state of charge.

10. The method according to claim 1, the determining the state of charge further comprising:
    determining a heat transfer coefficient between thermal energy transport fluid flowing through a heat exchanger of the thermal energy storage module and a thermal storage medium of the thermal energy storage module.

11. The method according to claim 10, the determining the heat transfer coefficient further comprising:

    measuring a flow rate of the thermal energy transport fluid flowing through the heat exchanger;
    measuring a first temperature of the thermal energy transport fluid flowing into the heat exchanger;
    measuring a second temperature of the thermal energy transport fluid flowing out of the heat exchanger; and
    determining the heat transfer coefficient using an energy balance equation, based on the flow rate of the thermal energy transport fluid, the first temperature of the thermal energy transport fluid, and the second temperature of the thermal energy transport fluid.

12. The method according to claim 1, the determining the at least one of (i) the state of charge or (ii) the state of health further comprising:

    determining the state of charge using a controller of the thermal management system; and
    determining the state of health using a processor of a remote server.

13. The method according to claim 1, the determining the at least one of (i) the state of charge or (ii) the state of health further comprising:
    determining the at least one of (i) the state of charge or (ii) the state of health using at least one of a machine learning model or a physical model.

14. The method according to claim 13, the determining the at least one of (i) the state of charge or (ii) the state of health further comprising:
    determining the at least one of (i) the state of charge or (ii) the state of health using a combination of the machine learning model and the physical model.

15. The method according to claim 13 further comprising:receiving, from a remote server, updates to at least one parameter of the at least one of the machine learning model or the physical model.

**FIG. 1**

**FIG. 2**

**200**

**210** Measure parameters of a thermal management system having thermal energy storage.

**220** Determine a state of charge and/or state of health of the thermal energy storage based on the measured parameters.

**230** Provide the state of charge and/or state of health as a virtual sensor for thermal management system.

# FIG. 3

300

310

320

TES charging status

73% (cold)

15 hours left

FIG. 4

**EUROPEAN SEARCH REPORT**

Europäisches
Patentamt
European
Patent Office
Office européen
des brevets

Application Number

EP 25 20 9549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 626 979 A (TEPEO LTD [GB]) 14 August 2024 (2024-08-14) | 1-3,10, 12-15 | INV. F25B49/02 |
| A | * pages 9, 10; figures 1-5 * | 4-9,11 | |
| | ----- | | |
| X | US 11 920 871 B2 (ROLLS ROYCE NAM TECH INC [US]) 5 March 2024 (2024-03-05) | 1-3,10, 12-15 | |
| A | * columns 2-4; figures 1-3 * | 4-9,11 | |
| | ----- | | |

**TECHNICAL FIELDS SEARCHED (IPC)**

F25B

The present search report has been drawn up for all claims

| Place of search | Date of completion of the search | Examiner |
|---|---|---|
| Munich | 25 February 2026 | Amous, Moez |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 729 861 A1**

## ANNEX TO THE EUROPEAN SEARCH REPORT
## ON EUROPEAN PATENT APPLICATION NO.

EP 25 20 9549

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2026

| Patent document cited in search report | | Publication date | Patent family member(s) | | Publication date |
|---|---|---|---|---|---|
| GB 2626979 | A | 14-08-2024 | NONE | | |
| US 11920871 | B2 | 05-03-2024 | US | 2022163270 A1 | 26-05-2022 |
| | | | US | 2024210121 A1 | 27-06-2024 |

EPO FORM P0459

For more details about this annex : see Official Journal of the European Patent Office, No. 12/82

19